# EUROPÄISCHE PATENTSCHRIFT

(11) **EP 0 649 776 B1**
(45) Veröffentlichungstag und Bekanntmachung des Hinweises auf die Patenterteilung: **10.03.1999**
(21) Anmeldenummer: 94115515.2
(22) Anmeldetag: 01.10.1994
(51) Int. Cl.: B60R 21/00, G01S 13/93

(54) **System zur Überwachung und Steuerung von sicherheitsrelevanten Fahrzeugkomponenten**
System for monitoring and controlling safety relevant components in a vehicle
Système pour surveiller et commander des composants relatifs à la sécurité dans un véhicule

(30) Priorität: 21.10.1993 DE 4335979
(43) Veröffentlichungstag der Anmeldung: 26.04.1995
(73) Patentinhaber: TEMIC TELEFUNKEN microelectronic GmbH, 74072 Heilbronn (DE)
(72) Erfinder: Spies, Martin, D-85276 Pfaffenhofen (DE); Spies, Hans, D-85276 Pfaffenhofen (DE)
(74) Vertreter: Maute, Hans-Jürgen, Dipl.-Ing.

(56) Entgegenhaltungen:
- EP-A- 0 210 079
- GB-A- 2 262 829
- US-A- 4 916 450
- ASCOM TECHNISCHE MITTEILUNGEN, Nr. 3/4, 1991 BERN CH, Seiten 26-27, XP 000294686 LINSS 'Verkehrsmanagement der Zukunft?'
- ELECTRONICS & COMMUNICATION JOURNAL, Bd. 3, Nr. 5, 1991 LONDON GB, Seiten 232-240, XP 000265405 STOVE 'Obstacle detection radar for cars'

## Beschreibung

**Die Erfindung betrifft** ein Sicherheits-Management-System gemäß dem Oberbegriff der Patentansprüche 1, 2 und 3.

**Stand der Technik** sind:
Airbag Auslösegeräte, z.B. des Typs ZAE der Firma TEMIC Telefunken microelectronic GmbH.
Abstandswarnsysteme DE 36 40 449 C1, DE 37 35 267 C1, DE 37 38 221 C1, Tempomat, z.B. der Firma VDO, ein Motor-Management-System für die möglichst gleichmäßige Einhaltung einer vorgewählten Reisegeschwindigkeit, und SZ vom 22.12.90, Anti-Schlupf-Regelung (ASR), ein Anti-Blockier-System (ABS),
DE 37 32 348 C1.
Die EP 0 210 079 A offenbart gleichfalls ein Sicherheits-Management-System.
Dieses System wird für Rückhalteeinrichtungen benötigt, die bei Gefahr ausgelöst werden. Es besteht unter anderem aus einem Abstandsmeßsystem einem fahrzeuginternen Beschleunigungsmeßsystem und einer zentralen Rechnereinheit. Mit diesem Sicherheits-Management-System wird die Aufprallgeschwindigkeit bereits vor dem Aufprall mit Hilfe des Abstandsmeßsystem erfaßt, wobei dieser Wert dann an die Rechnereinheit weitergeleitet wird und die Aktivierung des Rückhaltesystems beeinflußt, welches von fahrzeuginternen Beschleunigungsmeßsystem ausgelöst wird

**Nachteile** der bisherigen Systeme:
- Einzelsysteme ohne Vernetzung, daher teuer,
- Informationsaustausch nur über langsamen Bus oder gar nicht möglich,
- vorhandene Informationen nicht nutzbar,
- bei Sicherheitssystemen Komfortinhalte nicht genutzt,
- bei Komfort- und Unterstützungssytemen Sicherheitsinhalte nicht genutzt,
- keine relevanten Vorraussagen für Sicherheitssysteme möglich,
- keinen Einfluß auf den Unfallverlauf.

**Aufgabe** der Erfindung ist es,
- die Sicherheit für Brems- und Ausweichmanöver zu verbessern,
- die Wirkung für Sicherheitssysteme (wie Airbag,ABS,ASR) zu erhöhen,
- eine Lernfähigkeit in Hinblick auf verkehrs- und gefährdungsrelevante Daten und Einstellungen zu schaffen.

Die Lösung diese Aufgabe ist in den Ansprüchen 1, 2 und 3 enthalten.

Die Erfindung wird anhand eines Ausführungsbeispieles näher beschrieben.
Es zeigen:

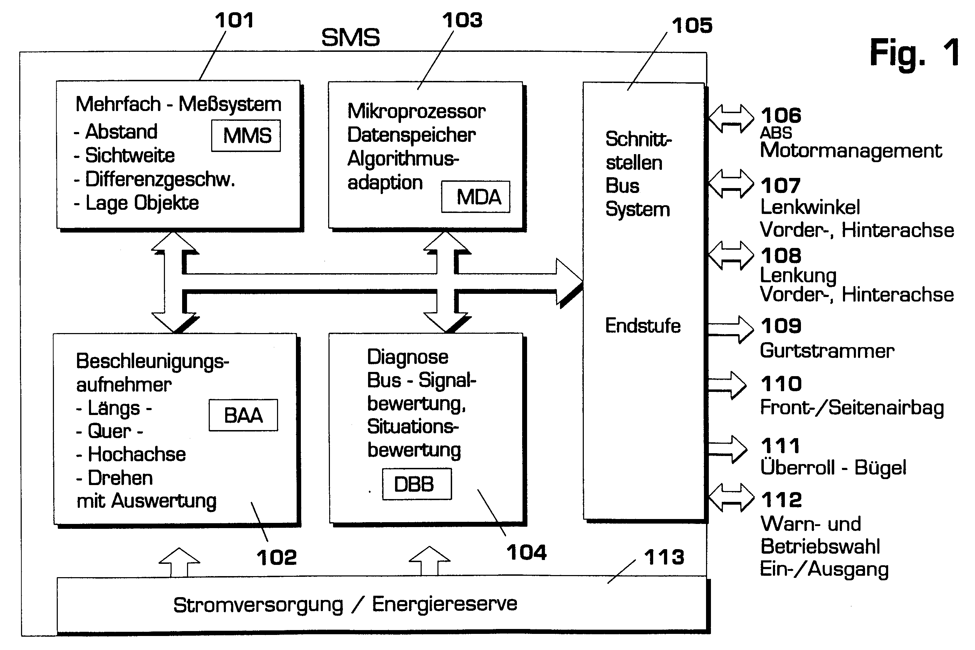

- Fig. 1: ein Blockschaltbild und
- Fig. 2: eine Fahrzeugansicht mit Mehrfachmeßgerät

Das Sicherheits-Management-System enthält:

Ein Mehrfach-Meßsystem 101, das im einfachsten Fall die Entfernung zu anderen Fahrzeugen und die Differenzgeschwindigeit ermittelt und im weiteren Ausbauzustand folgende Daten liefert:
- Sichtweite
- vor dem Fahrzeug fahrende Verkehrsteilnehmer oder stehende Objekte
- Dynamik der Szenerie/Umwelt des Fahrzeugs
- statischer und dynamischer Zustand von Straße/Fahrzeug
- Bremsbetätigung über Bremslichtauswertung, Ausschaltzeiten.

Einen Beschleunigungsaufnehmerblock mit Beschleunigungsauswertung 102, im einfachsten Fall aus einem Kanal mit Airbag-Algorithmusauswertung bestehend, im weiteren Ausbau Aufnahme und Auswertung folgender Daten:
- Längs-, Quer-, Hochachsen-Beschleunigung
- Drehbeschleunigung: Längs-, Quer-, bei Überschlag, oder rückseitig am Fahrzeug.

Einen Mikroprozessor und Rechnerblock 103 mit Datenspeicher und Algorithmen für Vorder- und Hinterachssteuerung (auch bei Schlupf), Steuerung der Rückhaltesystem-Zwangsbenutzung und Motorsteuerung sowie ABS-Eingriff.

Einen Block mit Eigendiagramm, Bewertung der Bus-Signale sowie eine gleitende Situationsbewertung 104.

Eine Einheit 105 mit Schnittstellen und Endstufen zu
- ABS, Motor-Management 106
- Lenkwinkel Vorder- und Hinterachse 107
- Lenkung Vorder- und Hinterachse 108
- Gurtstrammer 109
- Front- und Seitenairbag 110
- Überrollbügel 111
- Warn- und Betriebswahl Ein/Aus 112.

Die Einheit hat eine eigene Stromversorgung und Energiereserve 113.

Im einfachsten Konfigurationszustand werden folgende Signale ausgewertet und über die Schnittstellen zur Wirkung gebracht:

Vor und bei Kollision mit Hindernissen und Fahrzeugen die Eigengeschwindigkeit, Differenzgeschwindigkeit, Beschleunigungsverlauf vor und während des Aufpralls. Diese Daten gehen dem Bordrechner (CPU) über Bus oder ähnliche Sammelleitungen 112 zu und diese entscheidet nacheinander über Warnung, Bremsbetätigung, Motorabregelung und Auslösung des Rückhaltesystems. Zur Stüzung des Auslösealgorithmus wird die vorausgegangene Szenerie mit untersucht und ausgewertet, z.B. die Reibwertbestimmung Straße/Fahrzeug der letzten Bremsvorgänge aus dem ABS oder die Abstandshaltung des Fahrers oder die Dichte des Verkehrs.

Bei unterschiedlicher Verkehrsdichte und Gruppendisziplin werden Funktionen wie Warnen und ggf. Eingriffe wie Zwangsabregelung des Motors sowie Zwangsbremstätigkeit selbstlernend vom Rechner aus den untersuchten Daten abgeleitet und das Fahrverhalten durch Algorithmusänderung dem Verkehrs- und Straßenzustandsgeschehen angepaßt.

Bei Ausnützung aller Möglichkeiten des Systems wird über 101 auch die Lage des Eigenfahrzeuges zu anderen Verkehrsteilnehmern bzw. zu Hindernissen und Straßenbegrenzungen in Zusammenhang mit allen Beschleunigungen im Linear- und Drehbereich aus 102 sowie den Fahrzeugdaten aus der Schnittstelle 105 im Bus-System genutzt um folgendes nacheinander zu betätigen:
- Warnung
- Motorabregelung
- Zwangsbremsung
- Zwangslenkung Vorder- und/oder Hinterachse
- Überrollbügel
- Gurtstrammer
- Airbags
- Emergency Call
- Identifikations-System und
- Speicherung der Daten.

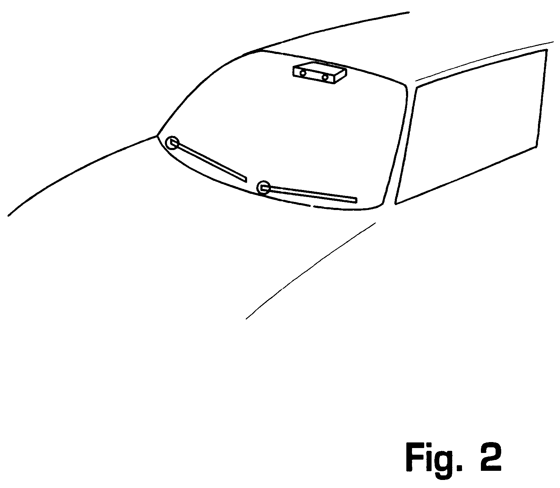

Das Mehrfach-Meßgerät wird vorteilhafterweise als Gesamtsystem am Fahrzeug (am Rückspiegel) oder im Inneren im Dachbereich nahe der Frontscheibe angeordnet (siehe Fig. 2).

## Patentansprüche

1. Sicherheits-Management-System zur Auslösung von Rückhalteeinrichtungen (109, 110, 111) bestehend aus:
- einem Abstandsmeßsystem (101) zu Objekten auf oder an der Straße,
- einer Vorrichtung zur Erfassung der Daten bezüglich der Verkehrsdichte
- einem fahrzeuginternen Beschleunigungsmeßsystem (102),
- einer Bus-Verbindung (105) zu anderen Fahrzeug-Meßsystemen und
- einer zentralen (Bord-) Rechnereinheit (CPU) (103),
wobei dieses System bereits vor einem Aufprall die Aufprallgeschwindigkeit mit Hilfe des Abstandsmeßsystems (101) erfaßt, diesen Wert an die Rechnereinheit (103) weiterleitet und dieser Wert über die Bus-Verbindung (105) die Aktivierung des Rückhaltesystems (109, 110, 111), welches vom fahrzeuginternen Beschleunigungsmeßsystem (102) ausgelöst wird, mitbeeinflußt, **dadurch gekennzeichnet, daß** dieses System auch automatisch eine Zwangsbremsung auslöst oder das Bremsen beeinflußt, um den Aufprall zu verhindern oder abzumildern.

2. Sicherheits-Management-System zur Auslösung von Rückhalteeinrichtungen (109, 110, 111) bestehend aus:
- einem Abstandsmeßsystem (101) zu Objekten auf oder an der Straße,
- einer Vorrichtung zur Erfassung der Daten bezüglich der Verkehrsdichte
- einem fahrzeuginternen Beschleunigungsmeßsystem (102),
- einer Bus-Verbindung (105) zu anderen Fahrzeug-Meßsystemen und
- einer zentralen (Bord-) Rechnereinheit (CPU) (103),
wobei dieses System bereits vor einem Aufprall die Aufprallgeschwindigkeit mit Hilfe des Abstandsmeßsystems (101) erfaßt, diesen Wert an die Rechnereinheit (103) weiterleitet und dieser Wert über die Bus-Verbindung (105) die Aktivierung des Rückhaltesystems (109, 110, 111), welches vom fahrzeuginternen Beschleunigungsmeßsystem (102) ausgelöst wird, mitbeeinflußt, **dadurch gekennzeichnet, daß** dieses System auch automatisch eine Zwangsabregelung des Motors auslöst, um den Aufprall zu verhindern oder abzumildern.

3. Sicherheits-Management-System zur Auslösung von Rückhalteeinrichtungen (109, 110, 111) bestehend aus:
- einem Abstandsmeßsystem (101) zu Objekten auf oder an der Straße,
- einer Vorrichtung zur Erfassung der Daten bezüglich der Verkehrsdichte
- einem fahrzeuginternen Beschleunigungsmeßsystem (102),
- einer Bus-Verbindung (105) zu anderen Fahrzeug-Meßsystemen und
- einer zentralen (Bord-) Rechnereinheit (CPU) (103),
wobei dieses System bereits vor einem Aufprall die Aufprallgeschwindigkeit mit Hilfe des Abstandsmeßsystems (101) erfaßt, diesen Wert an die Rechnereinheit (103) weiterleitet und dieser Wert über die Bus-Verbindung (105) die Aktivierung des Rückhaltesystems (109, 110, 111), welches vom fahrzeuginternen Beschleunigungsmeßsystem (102) ausgelöst wird, mitbeeinflußt, **dadurch gekennzeichnet, daß** dieses System auch automatisch eine Zwangslenkung auslöst oder die Lenkung beeinflußt, um den Aufprall zu verhindern oder abzumildern.

4. Sicherheits-Management-System nach einem der vorangegangenen, Ansprüche **dadurch gekennzeichnet, daß** Abstandsmeßsystem (101) beziehungsweise die Einrichtung zur Erfassung der Verkehrsdichte (101) oder das ganze Sicherheits-Management-System im Dachbereich oder im Bereich des Rückspiegel des Fahrzeugs angebracht ist.

## Claims

1. Safety management system for triggering restraint devices (109, 110, 111) consisting of:
- a system (101) for measuring the distance to objects in or on the road,
- a device for capturing data relevant to the volume of traffic,
- an acceleration measuring system (102) internal to the vehicle,
- a bus connection (105) to other measuring systems of the vehicle and
- a central (on-board) computer unit (CPU) (103),
wherein this system determines the impact speed prior to a crash with the help of the distance measuring system (101) and passes this value to the computer unit (103) and wherein this value is also used via the bus connection (105) in the activating process for the restraint system (109, 110, 111) which is triggered by the acceleration measuring system (102) internal to the vehicle, characterised in that this system also automatically triggers emergency braking or is effective on the brakes for preventing or softening the impact.

2. Safety management system for triggering restraint devices (109, 110, 111) consisting of:
- a system (101) for measuring the distance to objects in or on the road,
- a device for capturing data relevant to the volume of traffic,
- an acceleration measuring system (102) internal to the vehicle,
- a bus connection (105) to other measuring systems of the vehicle and
- a central (on-board) computer unit (CPU) (103),
wherein this system determines the impact speed prior to a crash with the help of the distance measuring system (101) and passes this value to the computer unit (103) and wherein this value is also used via the bus connection (105) in the activating process for the restraint system (109, 110, 111) which is triggered by the acceleration measuring system (102) internal to the vehicle, characterised in that this system also automatically effects emergency throttling down of the engine for preventing or softening the impact.

3. Safety management system for triggering restraint devices (109, 110, 111) consisting of:
- a system (101) for measuring the distance to objects in or on the road,
- a device for capturing data relevant to the volume of traffic,
- an acceleration measuring system (102) internal to the vehicle,
- a bus connection (105) to other measuring systems of the vehicle and
- a central (on-board) computer unit (CPU) (103),
wherein this system determines the impact speed prior to a crash with the help of the distance measuring system (101) and passes this value to the computer unit (103) and wherein this value is also used via the bus connection (105) in the activating process for the restraint system (109, 110, 111) which is triggered by the acceleration measuring system (102) internal to the vehicle, characterised in that this system also automatically triggers emergency steering or is effective on the steering system for preventing or softening the impact.

4. Safety management system in accordance with any of the preceding Claims, characterised in that the distance measuring system (101) or the device for capturing data relevant to the volume of traffic (101) [sic], or, the whole of the safety management system is mounted in the roof region or in the vicinity of the rear view mirror of the vehicle.

## Revendications

1. Système de gestion de sécurité pour déclencher des dispositifs d'arrêt (109, 110, 111) constitué de :
- un système de mesure des distances (101) par rapport aux objets qui sont sur ou le long de la route,
- un dispositif de saisie des données concernant la densité de la circulation,
- un système de mesure de la circulation (102) interne au véhicule,
- une liaison bus (105) avec d'autres systèmes de mesure du véhicule, et
- une unité centrale de calcul de bord (CPU) (103),
dans lequel ce système saisit, déjà avant un choc, la vitesse du choc à l'aide du système de mesure des distances (101), transmet cette valeur à l'unité de calcul (103) et dans lequel cette valeur, par l'intermédiaire de la liaison bus (105), influence l'activation du système d'arrêt (109, 110, 111) qui est déclenché par le système de mesure de l'accélération (102) interne au véhicule,
caractérisé par le fait que ce système déclenche également automatiquement un freinage forcé ou influence le freinage pour éviter ou minorer le choc.

2. Système de gestion de sécurité pour déclencher des dispositifs d'arrêt (109, 110, 111) constitué de :
- un système de mesure des distances (101) par rapport aux objets qui sont sur ou le long de la route,
- un dispositif de saisie des données concernant la densité de la circulation,
- un système de mesure de la circulation (102) interne au véhicule,
- une liaison bus (105) avec d'autres systèmes de mesure du véhicule, et
- une unité centrale de calcul de bord (CPU) (103),
dans lequel ce système saisit, déjà avant un choc, la vitesse du choc à l'aide du système de mesure des distances (101), transmet cette valeur à l'unité de calcul (103) et dans lequel cette valeur, par l'intermédiaire de la liaison bus (105), influence l'activation du système d'arrêt (109, 110, 111) qui est déclenché par le système de mesure de l'accélération (102) interne au véhicule,
caractérisé par le fait que ce système déclenche également automatiquement une décélération forcée du moteur pour éviter ou minorer le choc.

3. Système de gestion de sécurité pour déclencher des dispositifs d'arrêt (109, 110, 111) constitué de :
- un système de mesure des distances (101) par rapport aux objets qui sont sur ou le long de la route,
- un dispositif de saisie des données concernant la densité de la circulation,
- un système de mesure de la circulation (102) interne au véhicule,
- une liaison bus (105) avec d'autres systèmes de mesure du véhicule, et
- une unité centrale de calcul de bord (CPU) (103),
dans lequel ce système saisit, déjà avant un choc, la vitesse du choc à l'aide du système de mesure des distances (101), transmet cette valeur à l'unité de calcul (103) et dans lequel cette valeur, par l'intermédiaire de la liaison bus (105), influence l'activation du système d'arrêt (109, 110, 111) qui est déclenché par le système de mesure de l'accélération (102) interne au véhicule,
caractérisé par le fait que ce système déclenche également automatiquement une orientation forcée des roues directrices ou influence leur orientation pour éviter ou minorer le choc.

4. Système de gestion de la sécurité selon l'une des revendications précédentes,
caractérisé par le fait que le système de mesure des distances (101), ou le dispositif de saisie de la densité de circulation (101) ou l'ensemble du système de gestion de la sécurité est placé près du pavillon ou près du rétroviseur du véhicule.
